# EUROPÄISCHE PATENTSCHRIFT

(11) **EP 0 386 862 B1**
(45) Veröffentlichungstag und Bekanntmachung des Hinweises auf die Patenterteilung: **13.07.1994**
(21) Anmeldenummer: 90250058.6
(22) Anmeldetag: 23.02.1990
(51) Int. Cl.: A47J 39/00

(54) **Gargerät**
Cooking apparatus
Appareil de cuisson

(30) Priorität: 09.03.1989 DE 8902903 U
(43) Veröffentlichungstag der Anmeldung: 12.09.1990
(73) Patentinhaber: LechMetall Landsberg GmbH Edelstahlerzeugnisse, D-86899 Landsberg (DE)
(72) Erfinder: Kohlstrung, Peter, D-8912 Kaufering (DE); Lafuntal, Ladislav, D-8031 Esting (DE)
(74) Vertreter: Goddar, Heinz J., Dr.

(56) Entgegenhaltungen:
- EP-A- 0 173 066
- EP-A- 0 203 407
- EP-A- 0 244 538
- EP-A- 0 298 063
- EP-A- 0 313 768
- DE-A- 2 856 094
- DE-U- 8 814 925
- GB-A- 2 010 078
- US-A- 3 943 842
- US-A- 4 426 923
- US-A- 4 506 598
- US-A- 4 742 455

## Beschreibung

Die Erfindung betrifft ein Gargerät mit einem Garraum und einer Einrichtung zum Einführen von Wasser in flüssiger oder in Dampfform in den Garraum.

Herkömmliche Gargeräte haben in der Regel mehrere fest eingestellte, wählbare Betriebsarten, wie "Dämpfen", "Heißluft" und Kombinationen aus "Heißluft" und "Dampf".

In der Praxis stellen sich jedoch häufig ungewollte Feuchtigkeitsverhältnisse in dem Garraum ein, die von der Beschaffenheit des Gargutes und eventuellen Eingriffen in den Garprozeß (z.B. Öffnen der Garraumtür) herrühren.

Gart man beispielsweise Hühner bei einer Garraumtemperatur von 200°C, erreicht der Partialdampfdruck des Wassers schon nach wenigen Minuten 1 Bar, was auf ein Austreten der Eigenfeuchtigkeit des Gargutes zurückzuführen ist. Ein solcher Feuchtigkeitsgrad (unter "Feuchtigkeitsgrad" wird hier und im folgenden der Partialdampfdruck des Wassers verstanden) ist jedoch nicht erwünscht. Vielmehr sollten Hühner in möglichst feuchtigkeitsfreiem Raum (z.B. Grill) gegart Werden. Nur so ist nämlich erreichbar, daß die Haut knusprig wird.

Bei Dämpfprodukten, wie beispielsweise Kartoffeln oder Gemüse wird ein 100 %-iger Feuchtigkeitsgrad (d. h. ein Partialdampfdruck des Wassers von 1 Bar, bei drucklosem Betrieb, wie hier und auch im folgenden unter Bezugnahme auf das Gargerät nach der Erfindung voraussetzt) gewünscht.

Bisher bekannte Gargeräte regeln die Dampfproduktion temperaturabhängig, was dazu führt, daß sich häufig ein mehr oder weniger in seiner Zusammensetzung vorhersagbares Dampf/Luftgemisch im Garraum bildet. Der Feuchtigkeitsgrad ist dann aber meistens zu gering.

Vorproduzierte Speisen, welche erneut erwärmt werden sollen, bedingen einen wohldefinierten Feuchtigkeitsgrad der Garraumatmosphäre. Liegt der Feuchtigkeitsgrad zu niedrig, besteht die Gefahr, daß die Speisen austrocknen. Liegt der Feuchtigkeitsgrad aber zu hoch, bilden sich durch Kondensatlösung Wasserpfützen auf den Platten oder Behältern und ursprünglich krosse Oberflächen werden durchweicht.

In der DE-A 28 56 094 ist ein Heißluft-Gargerät beschrieben. Sobald die Betriebstemperatur 100°C überschreitet, können die dann aus den zu garenden Nahrungsmittel austretenden Wrasen durch eine Feuchtigkeitsmeßvorrichtung erfaßt und ihr relativer Feuchtigkeitsgehalt bestimmt werden. Die Feuchtigkeitsmeßvorrichtung ist außerhalb des Garraumes in einem Wrasenabzugsschacht angeordnet, in dem ständig ein Luft- bzw. Wrasenstrom aufrechterhalten wird. Der Feuchtigkeitsgehalt der Garraumatmosphäre soll dabei durch ein mehr oder minder schnell laufendes, die Wrasen abziehehendes Gebläse eingestellt werden, wobei die Drehzahl des Gebläses abhängig von dem ermittelten Feuchtigkeitsgehalt im Abzugschacht ist.

Die GB-A 2 010 078 offenbart einen Dämpfer, der so betrieben ist, daß in ihm immer mit Atmosphärendruck gearbeitet werden kann. Dabei kann überschüssiger Dampf aus dem Garraum durch eine Entlüftungsleitung austreten und gelangt in eine Kammer, in der er mittels eines kalten Wasserstrahls kondensiert wird. Erst wenn ein am Ende der Kammer angeordneter Temperaturfühler aufgrund eines zu hohen Dampfdurchtrittes eine entsprechende Temperaturerhöhung erfaßt, wird eine Heizung ausgeschaltet, so daß die Dampferzeugung beim Dämpfer unterbrochen wird. Eine Feuchtigkeitsregelung ist für diesen bekannten Dämpfer nicht beabsichtigt.

Die EP-A 0 244 538 zeigt ein Gargerät mit einem Garraum und einer Einrichtung zum Einführen von Wasser in flüssiger Form in den Garraum, so wie eine Einrichtung zum Abführen von Feuchtigkeit aus dem Garraum. Dabei wird die Feuchtigkeit im Garraum manuell über einen Drehknopf gesteuert, ebenso erfolgt die Abfuhr von Flüssigkeiten über ein ständig offenes Drainagerohr ohne eine irgendwie geartete Steuerung.

Der Erfindung liegt die Aufgabe zugrunde, ein Gargerät zu schaffen, bei dem der Partialdampfdruck des Wassers in der Garraumatmosphäre der Art des Gargutes angepaßt werden kann.

Erfindungsgemäß wird die gestellte Aufgabe bei einem Gargerät der eingangs genannten Art gelöst durch, mindestens einen

Feuchtigkeitssensor in dem Garraum und eine Regeleinrichtung, welche als erste Regelparameter die Ausgangssignale des Feuchtigkeitssensors aufnimmt und mit einem Sollwert vergleicht und entsprechend dem Ergebnis des Vergleichs die Einrichtung zum Einführen von Wasser in den Garraum oder die Einrichtung zum Abführen von Feuchtigkeit aus dem Garraum ansteuert.

Das erfindungsgemäße Gargerät ermöglicht es, den Feuchtigkeitsgrad der Garraumatmosphäre dem Gargut angemessen einzustellen und ggf. zu halten. Wird eine besonders krosse Oberfläche des Gargutes gewünscht, so ist der Sollwert niedrig zu wählen, während ein hoher Sollwert vorzugeben ist, wenn das Gargut gedämpft werden soll. Zum Wiedererwärmen von Speisen können mittlere Sollwerte vorgegeben werden.

Nach einer bevorzugten Ausführungsform der Erfindung ist vorgesehen, daß die Einrichtung zum Einführen von Wasser in den Garraum einen steuerbaren Dampferzeuger umfaßt. Viele herkömmliche Gargeräte weisen bereits Dampferzeuger auf. Dieser kann von der erfindungsgemäßen Regeleinrichtung gesteuert werden.

Alternativ oder zusätzlich dazu kann erfindungsgemäß vorgesehen sein, daß die Einrichtung zum Einführen von Wasser in den Garraum mindestens einen ersten steuerbaren Injektor zum Einspritzen von Wasser in den Garraum umfaßt. Da die Atmosphäre in dem Garraum beim Garen sehr heiß ist, verdampft das mittels des ersten Injektors eingespritzte Wasser augenblicklich und steigert so den Feuchtigkeitsgrad der Garraumatmosphäre.

Für die Ausführung der Einrichtung zum Abführen von Feuchtigkeit aus dem Garraum sieht die Erfindung mehrere Möglichkeiten vor, die alternativ oder auch kummulativ verwirklicht werden können:

Die Einrichtung zum Abführen von Feuchtigkeit aus dem Garraum kann erfindungsgemäß von einem steuerbaren Hilfslüfter zum Einblasen von Luft in den Garraum gebildet sein. Die eingeblasene Luft nimmt im Garraum Feuchtigkeit auf und wird über ein Lüftungsrohr wieder abgeführt.

Die Einrichtung zum Abführen von Feuchtigkeit aus dem Garraum kann auch mindestens eine Hilfsschaufel an dem Hauptlüfter des Gargerätes, mindestens eine Bohrung in der Tragscheibe des Hauptlüfters und mindestens eine steuerbar verschließbare Öffnung in der Innenkastenwand des Gargerätes umfassen. Dadurch wird wie bei der vorstehend erläuterten Lösung zusätzliche Luft in den Garraum gebracht. Diese nimmt Feuchtigkeit auf und wird abgeführt.

Die zusätzliche Luft zum Aufnehmen und Abführen von Feuchtigkeit aus dem Garraum kann erfindungsgemäß auch von einem steuerbar verschließbaren doppelten Luftleitblech mit mindestens einem Lufteinlaß zum Hauptlüfter des Gargerätes hin gebildet sein.

Auch kann das Prinzip des Abführens von Feuchtigkeit aus dem Garraum mittels Luft dadurch verwirklicht werden, daß mindestens ein erster steuerbarer Ventilator zum Absaugen feuchten Mediums vorgesehen ist, wobei infolge des Druckabfalls trockene Luft nachfließen kann, so daß insgesamt der Feuchtigkeitsgrad der Garraumatmosphäre sinkt. Die trockene Luft wird dem Garraum über das Lüftungsrohr zugeführt.

Die feuchte Luft kann auch durch mindestens einen steuerbar verschließbaren Kamin abgeführt werden, wobei auch in diesem Fall trockene Luft nachfließen kann.

Nach einer bevorzugten Ausführungsform der Erfindung umfaßt die Einrichtung zum Abführen von Feuchtigkeit aus dem Garraum einen axial in einem Hauptrohr mündenden, axial ausgerichteten zweiten Injektor, ein von dem zweiten Injektor stromabwärts in dem Hauptrohr mündendes, mit dem Garraum kommunizierendes Absaugrohr, einen im Bereich des Endes des Hauptrohres angeordneten Ablauf und ein dem zweiten Injektor vorgelagertes steuerbares Ventil. Hauptrohr und Absaugrohr bilden so eine Strahldüse (Venturi-Effekt), durch die Feuchtigkeit bzw. feuchte Luft aus dem Garraum in das Hauptrohr abgesaugt wird. Auch in diesem Fall kann dann trockene Luft nachfließen.

Schließlich kann erfindungsgemäß die Einrichtung zum Abführen von Feuchtigkeit aus dem Garraum auch mindestens einen steuerbaren Kondensator umfassen. Der Kondensator kann dabei eine im Garraum angeordnete, steuerbar von einem Kühlmedium durchströmte Leitung sowie eine Kondenswasserableitung umfassen.

Zur Verfeinerung der Regelung kann erfindungsgemäß vorgesehen sein, daß mindestens ein Temperaturfühler in dem Garraum angeordnet ist und daß die Regeleinrichtung Signale von dem Temperaturfühler empfängt und als zweite Regelparameter verarbeitet.

Der Sollwert für die Ausgangssignale des Feuchtigkeitssensors kann erfindungsgemäß einstellbar sein.

Dabei kann der Sollwert mittels eines Reglers, eines digitalen Tastenfeldes oder dergleichen entsprechend einem Wasser-Partialdruck von 0 bis 1 Bar einstellbar sein.

Es kann aber auch vorgesehen sein, daß der Sollwert entsprechend der Art des zu garenden Gargutes mittels eines Wählschalters, eines Tastenfeldes oder dergleichen zum Eingeben der Art des zu garenden Gargutes einstellbar ist, wobei die Regeleinrichtung einen Speicher zum Speichern von Sollwerten umfaßt, die den verschiedenen Arten von Gargut angemessen sind. Die Regeleinrichtung stellt in diesem Fall selbsttätig den entsprechenden Sollwert ein.

Im folgenden ist die Erfindung in ihren verschiedenen Ausführungsformen unter Bezugnahme auf die Zeichnungen mit weiteren Einzelheiten naher erläutert.

Es zeigen:
- Fig. 1: eine bevorzugte Ausführungsform der Einrichtung zum Einführen von Feuchtigkeit in den Garraum bei dem erfindungsgemäßen Gargerät und
- Fig. 2 bis 7: bevorzugte Ausführungsformen der erfindungsgemäßen Einrichtung zum Abführen von Feuchtigkeit aus dem Garraum bei dem erfindungsgemäßen Gargerät.

Übereinstimmende Elemente sind in den Figuren durchgehend mit den gleichen Bezugszeichen bezeichnet.

Alle in den Figuren dargestellten erfindungsgemäßen Gargeräte umfassen jeweils einen Feuchtigkeitssensor 40 und einen Temperaturfühler 60. Sowohl der Feuchtigkeitssensor 40 als auch der Temperaturfühler 60 sind in einem Garraum 10 des Gargerätes angeordnet. Die von dem Feuchtigkeitssensor 40 und dem Temperaturfühler 60 erzeugten Signale werden über Datenleitungen 52 bzw. 62 einer Regeleinrichtung 50 zugeführt.

Die Regeleinrichtung steuert entsprechend den Signalen von dem Feuchtigkeitssensor 40 und dem Temperaturfühler 60 eine Einrichtung zum Einführen von Feuchtigkeit in den Garraum 10 oder eine Einrichtung zum Abführen von Feuchtigkeit aus dem Garraum 10 an.

Die beiden letztgenannten Einrichtungen sind aus Gründen der Übersichtlichkeit in unterschiedlichen Figuren dargestellt, obwohl sie erfindungsgemäß in ein und demselben Gargerät vorgesehen sind. Auch können jeweils mehrere Einrichtungen zum Einführen und zum Abführen von Feuchtigkeit in einem einzigen Gargerät vorgesehen sein.

Bei dem erfindungsgemäßen Gargerät sind gemäß den Figuren in jeder Ausführung Lüftungsrohre 70 und 80 vorgesehen.

Zu den Figuren im einzelnen:

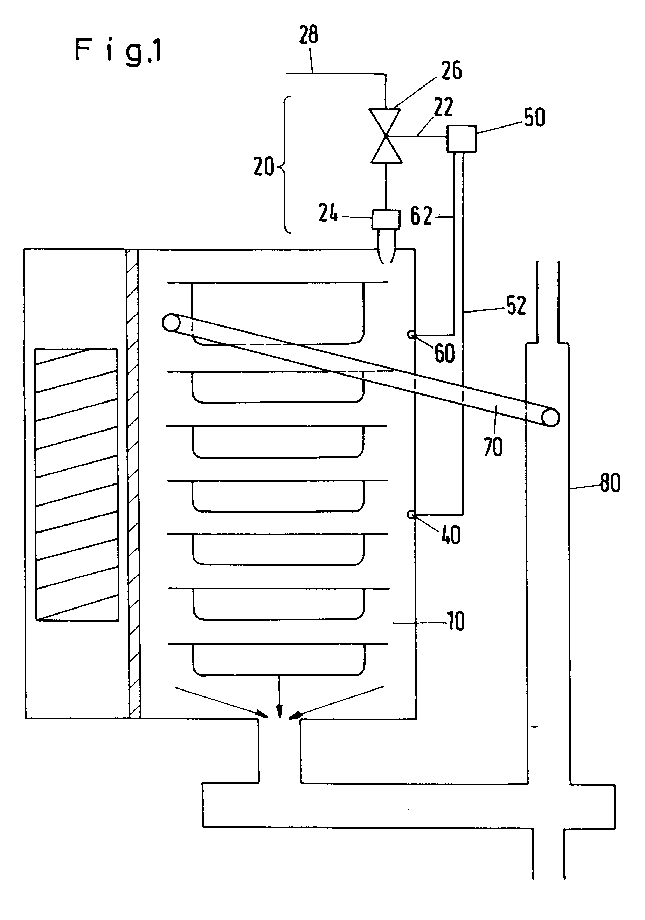

Figur 1 zeigt beispielhaft eine bevorzugte Ausführungsform der erfindungsgemäßen Einrichtung zum Einführen von Feuchtigkeit in den Garraum 10. Die genannte Einrichtung ist mit dem Bezugszeichen 20 bezeichnet. Sie umfaßt eine Steuerleitung 22 zu der Regeleinrichtung 50, mit Hilfe derer ein Ventil 26, vorzugsweise ein Magnetventil, angesteuert wird. Das Magnetventil speist einen ersten Injektor 24 aus einer Wasserleitung 28 (z.B. öffentliches Wassernetz). Ist das Ventil 26 geöffnet, spritzt der erste Injektor 24 Wasser in den Garraum 10, wodurch der Feuchtigkeitsgrad der Garraumatmosphäre steigt.

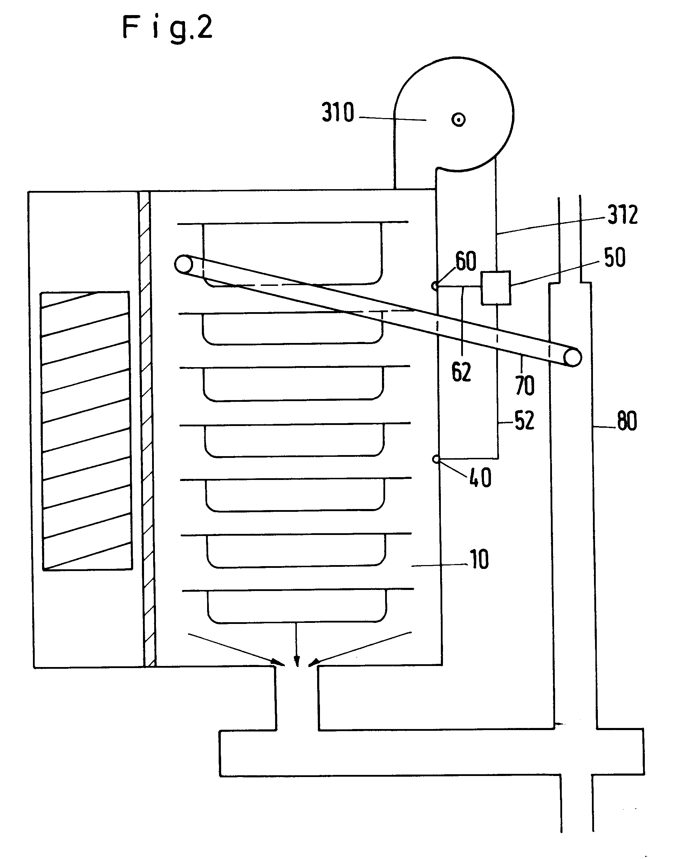

Gemäß Figur 2 umfaßt die Einrichtung zum Abführen von Feuchtigkeit aus dem Garraum 10 einen Hilfslüfter 310, der über eine Steuerleitung 312 von der Regeleinrichtung 50 gesteuert wird. Ist der Hilfslüfter 310 aktiviert, bläst er trockene Umgebungsluft in den Garraum 10. Die trockene Luft nimmt Feuchtigkeit auf und verläßt danach den Garraum 10 über das Lüftungsrohr 70, wodurch der Feuchtigkeitsgrad der Garraumatmosphäre sinkt.

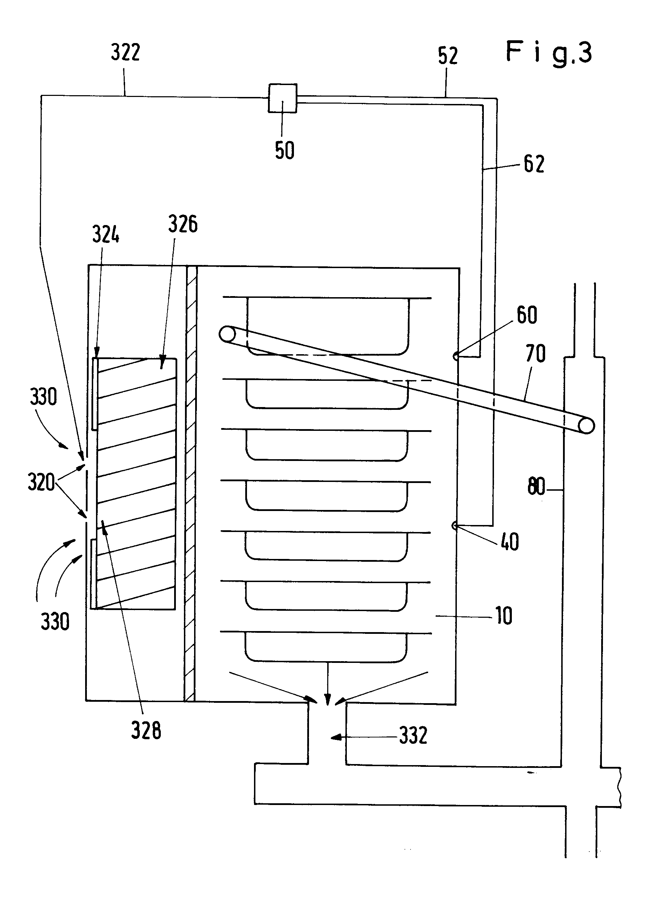

Bei der Einrichtung zum Abführen von Feuchtigkeit aus dem Garraum 10 gemäß Figur 3 wird, ähnlich wie bei derjenigen gemäß Figur 2, ebenfalls trockene Umgebungsluft 330 zum Aufnehmen von Feuchtigkeit in den Garraum 10 eingeführt. Die Luft nimmt in dem Garraum 10 Feuchtigkeit auf und wird über einen Abfluß 332 und/oder das Lüftungsrohr 70 wieder aus dem Garraum 10 herausgeführt, wodurch der Feuchtigkeitsgrad der Garraumatmosphäre sinkt. Bei diesem Ausführungsbeispiel erfolgt die Trockenluftzufuhr über Hilfsschaufeln 324 an dem Hauptlüfter 326 des Gargerätes. Die Hilfsschaufeln 324 erzeugen beim Betrieb des Hauptlüfters 326 einen Unterdruck, der bewirkt, daß durch Öffnungen 320 in der Innenkastenwand des Gargerätes und Bohrungen 328 in der Tragscheibe des Hauptlüfters 326 trockene Umgebungsluft in den Garraum 10 strömt. Die Öffnungen 320 sind über einen Schieber (nicht gezeigt) verschließbar, der wiederum über eine Steuerleitung 322 von der Regeleinrichtung 50 gesteuert wird.

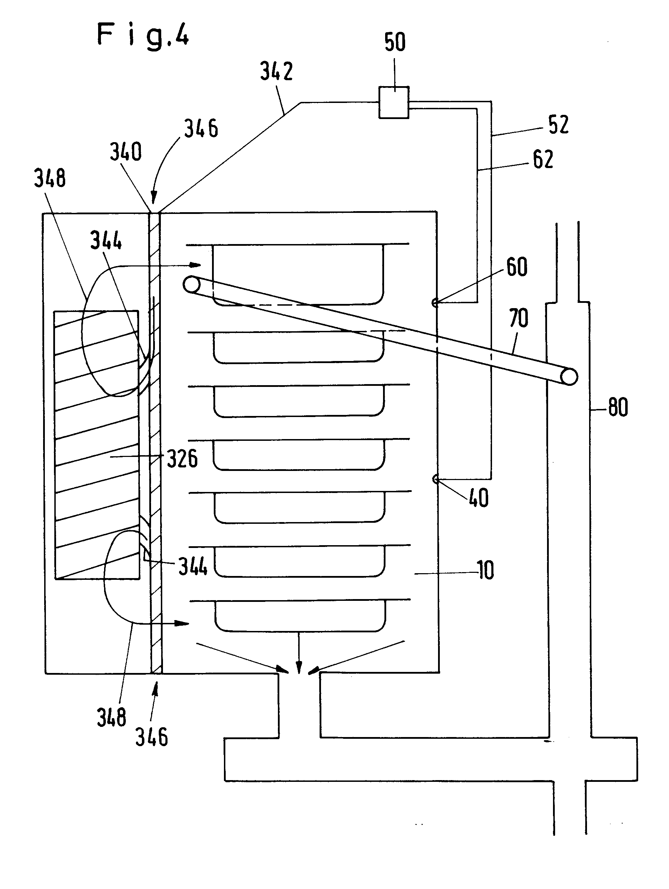

Bei dem Ausführungsbeispiel der Einrichtung zum Abführen von Feuchtigkeit aus dem Garraum 10 gemäß Figur 4 wird trockene Umgebungsluft 346 mittels eines doppelten Luftleitblechs 340, das Lufteinlässe 344 zum Hauptlüfter 326 hin umfäßt, dem Garraum 10 zugeführt, weil hier beim Betrieb des Hauptlüfters 326 ein entsprechender Unterdruck entsteht. Dies bewirkt, daß die trockene Umgebungsluft 346 in den Garraum strömen kann (vergleiche Pfeile 348), um dort Feuchtigkeit aufzunehmen. Das doppelte Luftleitblech 340 ist wiederum mittels eines Schiebers (nicht gezeigt) verschließbar, der über eine Steuerleitung 342 von der Regeleinrichtung 50 gesteuert wird.

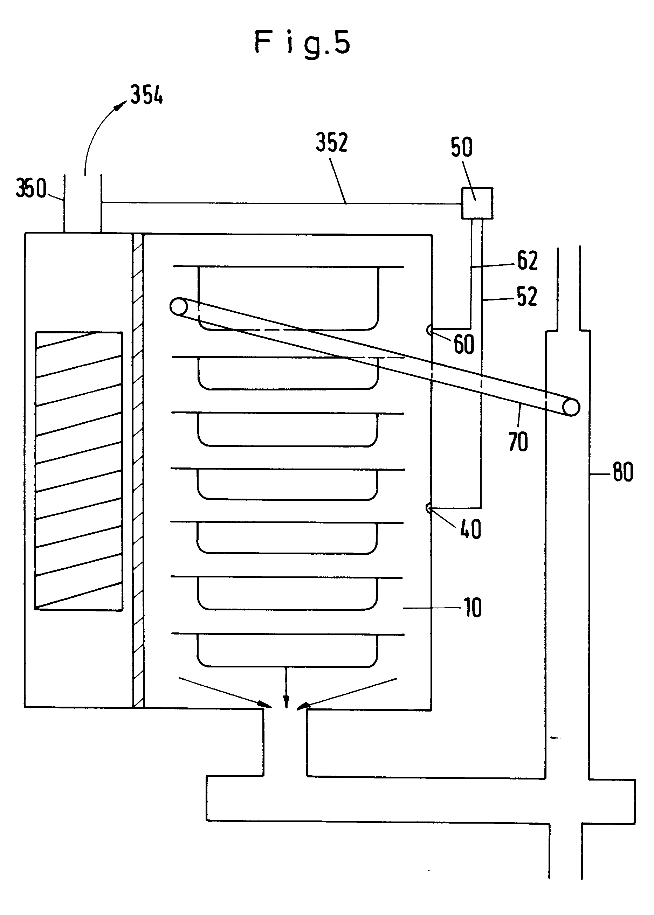

Gemäß Figur 5 wird mittels eines Kamins 350 feuchtes Medium 354 abgesaugt, wodurch ein Druckabfall entsteht, der ein Einströmen von trockener Umgebungsluft durch das Lüftungsrohr 70 bewirkt. Der Kamin 350 ist mittels einer Klappe (nicht gezeigt) verschließbar, welche über eine Steuerleitung 352 von der Regeleinrichtung 50 gesteuert wird.

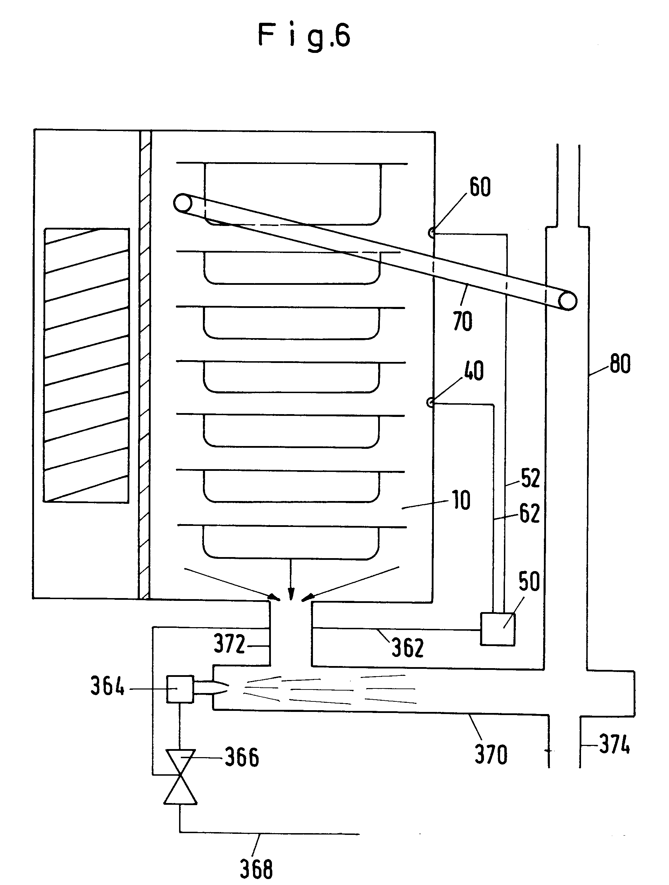

Bei der Einrichtung zum Abführen von Feuchtigkeit aus dem Garraum 10 gemäß Figur 6 wird, ähnlich wie bei der nach Figur 5, feuchtes Medium abgesaugt, um trockene Umgebungsluft nachströmen zu lassen. Gemäß Figur 5 ist ein zweiter Injektor 364 vorgesehen, der axial in ein Hauptrohr 370 mündet und axial ausgerichtet ist. Der zweite Injektor 364 wird über ein steuerbares Ventil 366, vorzugsweise ein Magnetventil, von einer Wasserleitung 368 (z.B. das öffentliche Netz) gespeist. Das Ventil 366 wird von der Regeleinrichtung 50 über eine Steuerleitung 362 gesteuert. Wird das Ventil 366 geöffnet, tritt Wasser aus dem Injektor 364 mit hohem Druck in das Hauptrohr 370 aus, so daß Hauptrohr 370 und zweiter Injektor 364 eine Strahldüse bilden (Venturi-Effekt). Der durch die Strömung entstehende Unterdruck bewirkt, daß feuchtes Medium aus dem Garraum 10 abgesaugt und durch trockene Umgebungsluft ersetzt wird. Das Wasser aus dem zweiten Injektor 364 und das damit abgesaugte feuchte Medium werden durch einen Ablauf 374 abgeführt.

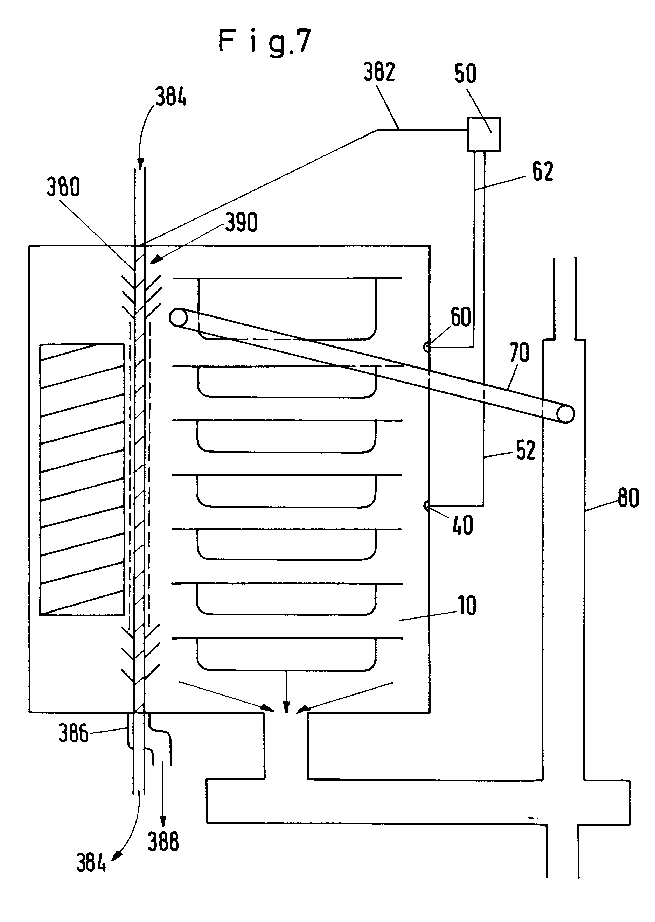

Gemäß Figur 7 ist die Einrichtung zum Abführen von Feuchtigkeit aus dem Garraum 10 von einem Kondensator gebildet, der eine in dem Garraum 10 angeordnete, von einem Kühlmedium 384 durchströmte Leitung 380 sowie eine Kondenswasserableitung 386 für Kondenswasser 388 umfaßt. Der Kühlmediumsfluß wird von einem Ventil (nicht gezeigt) in der Leitung 380 gesteuert, das wiederum über eine Steuerleitung 382 an die Regeleinrichtung 50 angeschlossen ist. Öffnet die Regeleinrichtung 50 das Ventil, so bildet sich infolge des Kühlmediumstromes in der Leitung 380 an deren Außenwänden Niederschlag 390, der als Kondenswasser 388 über die Kondenswasserableitung 386 abgeführt wird.

Im folgenden ist der Betrieb der in den Zeichnungen dargestellten Ausführungsbeispiele des erfindungsgemäßen Gargerätes im einzelnen erläutert:

Je nachdem, ob der von dem Feuchtigkeitssensor gemeldete Feuchtigkeitsgrad der Garraumatmosphäre einen vorgegebenen Sollwert über- oder unterschreitet, steuert die Regeleinrichtung 50 die Einrichtung zum Einführen von Feuchtigkeit in den Garraum 10 oder die Einrichtung zum Abführen von Feuchtigkeit aus dem Garraum 10 an. D.h. die Regeleinrichtung 50 öffnet bei Unterschreiten des Sollwertes das Ventil 26 nach Figur 1. Bei Überschreiten des Sollwertes betreibt sie den Hilfslüfter 310 nach Figur 2 und/oder öffnet den Schieber 320 bzw. 340 nach Figur 3 bzw. 4, die Klappe nach Figur 5 und/oder das steuerbare Ventil nach Figur 6 bzw. 7.

Durch sachgemäßes Vorgeben des Sollwertes kann somit der Feuchtigkeitsgrad der Garraumatmosphäre der Art des Gargutes entsprechend eingestellt und gehalten werden.

Erfindungsgemäß können verschiedene Arten vorgesehen sein, den Sollwert vorzugeben.

Zum einen kann der Sollwert manuell vorgebbar sein, wobei vorzugsweise ein Regler, ein digitales Tastenfeld oder dergleichen vorgesehen ist. Mit Hilfe des Reglers, des digitalen Tastenfeldes oder dergleichen kann von dem Bedienungspersonal ein Feuchtigkeitsgrad von 0% bis 100% eingestellt werden.

Es kann aber auch erfindungsgemäß vorgesehen sein, daß über ein Tastenfeld oder einen Wählschalter oder dergleichen dem Gargerät eingegeben wird, welcher Art das zu garende Gargut ist. In diesem Fall umfaßt die Regeleinrichtung erfindungsgemäß einen Speicher, in dem den vorzugebenden Arten von Gargut angemessene Sollwerte gespeichert und bei entsprechender Eingabe des Gargutes abrufbar sind.

In die Regelung gehen als Parameter vorzugsweise auch die von dem Temperaturfühler 60 abgegebenen Signale als Parameter ein.

Die in der vorstehenden Beschreibung, den Ansprüchen sowie der Zeichnung offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 10: Garraum
- 20: Einrichtung zum Einführen von Feuchtigkeit in den Garraum
- 22: Steuerleitung
- 24: Injektor
- 26: Ventil
- 28: Wasserleitung
- 40: Feuchtigkeitssensor
- 50: Regeleinrichtung
- 52: Datenleitung
- 60: Temperaturfühler
- 62: Datenleitung
- 70: Lüftungsrohr
- 80: Lüftungsrohr
- 310: Hilfslüfter
- 312: Steuerleitung
- 320: Öffnungen
- 322: Steuerleitung
- 324: Hilfsschaufeln
- 326: Hauptlüfter
- 328: Bohrungen
- 330: Umgebungsluft
- 332: Abfluß
- 340: Doppeltes Luftleitblech
- 342: Steuerleitung
- 344: Lufteinlaß
- 346: Umgebungsluft
- 348: Strömungsweg der Umgebungsluft
- 350: Kamin
- 352: Steuerleitung
- 354: feuchtes Medium
- 362: Steuerleitung
- 364: Injektor
- 366: Ventil
- 368: Wasserleitung
- 370: Hauptrohr
- 372: Verbindungsrohr
- 374: Ablauf
- 380: Leitung
- 382: Steuerleitung
- 384: Kühlmedium
- 386: Kondenswasserableitung
- 388: Kondenswasser
- 390: Niederschlag

## Patentansprüche

1. Gargerät mit einem Garraum (10) und mit einer Einrichtung (20) zum Einführen von Wasser in flüssiger Form oder in Dampfform in den Garraum (10) mit einer Einrichtung (310, 312; 320 bis 332; 340 bis 348; 350 bis 354; 360 bis 374; 380 bis 390) zum Abführen von Feuchtigkeit aus dem Garraum (10) sowie mit mindestens einem Feuchtigkeitssensor (40) in dem Garraum und einer Regeleinrichtung (50), welche als erste Regelparameter die Ausgangssignale des Feuchtigkeitssensors (40) aufnimmt und mit einem Sollwert vergleicht und entsprechend dem Ergebnis der Vergleichs die Einrichtung (20) zum Einleiten von Wasser in dem Garraum (10) oder die Einrichtung (310, 312; 320 bis 322; 340 bis 348; 350 bis 354; 360 bis 374; 380 bis 390) zum Abführen von Feuchtigkeit aus dem Garraum (10) ansteuert.

2. Gargerät nach Anspruch 1, dadurch gekennzeichnet, daß die Einrichtung (20) zum Einführen von Wasser in den Garraum (10) einen steuerbaren Dampferzeuger umfaßt.

3. Gargerät nach Anspruch 1 oder 2, dadurch gekennzeichnet, daß die Einrichtung (20) zum Einführen von Wasser in den Garraum (10) mindestens einen ersten steuerbaren Injektor (24) zum Einspritzen von Wasser in den Garraum (10) umfaßt.

4. Gargerät nach einem der vorangehenden Ansprüche, dadurch gekennzeichnet, daß die Einrichtung (310, 312; 320 bis 332; 340 bis 348; 350 bis 354; 360 bis 374; 380 bis 390) zum Abführen von Feuchtigkeit aus dem Garraum (10) einen steuerbaren Hilfslüfter (310) zum Einblasen von Luft in den Garraum (10) umfaßt.

5. Gargerät nach einem der vorangehenden Ansprüche, dadurch gekennzeichnet, daß die Einrichtung (310, 312; 320 bis 332; 340 bis 348; 350 bis 354; 360 bis 374; 380 bis 390) zum Abführen von Feuchtigkeit aus dem Garraum (10) folgendes umfaßt:
- mindestens eine Hilfsschaufel (324) an dem Hauptlüfter (326) des Gargerätes,
- mindestens eine Bohrung (328) in der Tragscheibe des Hauptlüfters (326) und
- mindestens eine steuerbar verschließbare Öffnung (320) in der Innenkastenwand des Gargerätes.

6. Gargerät nach einem der vorangehenden Ansprüche, dadurch gekennzeichnet, daß die Einrichtung (310, 312; 320 bis 332; 340 bis 348; 350 bis 354; 360 bis 374; 380 bis 390) zum Abführen von Feuchtigkeit aus dem Garraum (10) ein steuerbar verschließbares doppeltes Luftleitblech (340) mit mindestens einem Lufteinlaß (344) zum Hauptlüfter (326) des Gargerätes hin umfaßt.

7. Gargerät nach einem der vorangehenden Ansprüche, dadurch gekennzeichnet, daß die Einrichtung (310, 312; 320 bis 332; 340 bis 348; 350 bis 354; 360 bis 374; 380 bis 390) zum Abführen von Feuchtigkeit aus dem Garraum (10) mindestens einen ersten steuerbaren Ventilator zum Absaugen feuchten Mediums umfaßt.

8. Gargerät nach einem der vorangehenden Ansprüche, dadurch gekennzeichnet, daß die Einrichtung (310, 312; 320 bis 332; 340 bis 348; 350 bis 354; 360 bis 374; 380 bis 390) zum Abführen von Feuchtigkeit aus dem Garraum (10) mindestens einen steuerbar verschließbaren Kamin (350) umfaßt.

9. Gargerät nach einem der vorangehenden Ansprüche, dadurch gekennzeichnet, daß die Einrichtung (310, 312; 320 bis 332; 340 bis 348; 350 bis 354; 360 bis 374; 380 bis 390) zum Abführen von Feuchtigkeit aus dem Garraum (10) folgendes umfaßt:
- einen axial in einem Hauptrohr (370) mündenden, axial ausgerichteten zweiten Injektor (364),
- ein von dem zweiten Injektor (364) stromabwärts in dem Hauptrohr (370) mündendes, mit dem Garraum (10) kommunizierendes Absaugrohr (372),
- einen im Bereich des Endes des Hauptrohres (370) angeordneten Ablauf (374) und
- ein dem zweiten Injektor (364) vorgelagertes steuerbares Ventil (366).

10. Gargerät nach einem der vorangehenden Ansprüche, dadurch gekennzeichnet, daß die Einrichtung (310, 312; 320 bis 332; 340 bis 348; 350 bis 354; 360 bis 374; 380 bis 390) zum Abführen von Feuchtigkeit aus dem Garraum (10) mindestens einen steuerbaren Kondensator (380, 384, 386) umfaßt.

11. Gargerät nach Anspruch 10, dadurch gekennzeichnet, daß der Kondensator (380, 384, 386) eine im Garraum (10) angeordnete, steuerbar von einem Kühlmedium (384) durchströmte Leitung (380) sowie eine Kondenswasserableitung (386) umfaßt.

12. Gargerät nach einem der vorangehenden Ansprüche, dadurch gekennzeichnet, daß mindestens ein Temperaturfühler (60) in dem Garraum (10) angeordnet ist und daß die Regeleinrichtung (50) Signale von dem Temperaturfühler (60) empfängt und als zweite Regelparameter verarbeitet.

13. Gargerät nach einem der vorangehenden Ansprüche, dadurch gekennzeichnet, daß der Sollwert für die Ausgangssignale des Feuchtigkeitssensors (40) einstellbar ist.

14. Gargerät nach Anspruch 13, dadurch gekennzeichnet, daß der Sollwert für die Ausgangssignale des Feuchtigkeitssensors (40) mittels eines Reglers, eines digitalen Tastenfeldes oder dergleichen entsprechend einem Wasser-Partialdruck von 0 bis 1 Bar einstellbar ist.

15. Gargerät nach Anspruch 13, gekennzeichnet durch einen Wählschalter, ein Tastenfeld oder dergleichen zum Eingeben der Art des zu garenden Gargutes, wobei die Regeleinrichtung einen Speicher zum Speichern von Sollwerten umfaßt, die den verschiedenen Arten von Gargut angemessen sind.

## Claims

1. A cooking apparatus comprising a cooking chamber (10), a device (20) for introducing water in liquid or vapour form into the cooking chamber (10) and a device (310, 312; 320 to 332; 340 to 348; 350 to 354; 360 to 374; 380 to 390) for removing moisture from the cooking chamber (10) and at least one moisture sensor (40) in the cooking chamber and a regulating device (50) which records a first control parameter in the form of the output signals from the moisture sensor (40) and compares it with a set value and, depending on the result of the comparison, actuates the device (20) for introducing water into the cooking chamber (10) or the device (310, 312; 320 to 322; 340 to 348; 350 to 354; 360 to 374; 380 to 390) for removing moisture from the cooking chamber (10).

2. A cooking apparatus according to claim 1, characterised in that the device (20) for introducing water into the cooking chamber (10) comprises a controllable steam generator.

3. A cooking apparatus according to claim 1 or 2, characterised in that the device (20) for introducing water into the cooking chamber (10) comprises at least a first controllable injector (24) for injecting water into the cooking chamber (10).

4. A cooking apparatus according to any of the preceding claims, characterised in that the device (310, 312; 320 to 332; 340 to 348; 350 to 354; 360 to 374; 380 to 390) for removing moisture from the cooking chamber (10) comprises a controllable auxiliary fan (310) for blowing air into the cooking chamber (10).

5. A cooking apparatus according to any of the preceding claims, characterised in that the device (310, 312; 320 to 332; 340 to 348; 350 to 354; 360 to 374; 380 to 390) for removing moisture from the cooking chamber (10) comprises the following:
at least one auxiliary blade (324) on the main fan (326) of the cooking apparatus,
at least one bore (328) in the disc holding the main fan (326), and
at least one controllably closable opening (320) in the inner wall of the cooking-apparatus casing.

6. A cooking apparatus according to any of the preceding claims, characterised in that the device (310, 312; 320 to 332; 340 to 348; 350 to 354; 360 to 374; 380 to 390) for removing moisture from the cooking chamber (10) comprises a controllably closable double air baffle (340) comprising at least one air inlet (344) to the main fan (326) of the cooking apparatus.

7. A cooking apparatus according to any of the preceding claims, characterised in that the device (310, 312; 320 to 332; 340 to 348; 350 to 354; 360 to 374; 380 to 390) for removing moisture from the cooking chamber (10) comprises at least one first controllable ventilator for removing moist medium.

8. A cooking apparatus according to any of the preceding claims, characterised in that the device (310, 312; 320 to 332; 340 to 348; 350 to 354; 360 to 374; 380 to 390) for removing moisture from the cooking chamber (10) comprises at least one controllably closable chimney (350).

9. A cooking apparatus according to any of the preceding claims, characterised in that the device (310, 312; 320 to 332; 340 to 348; 350 to 354; 360 to 374; 380 to 390) for removing moisture from the cooking chamber (10) comprises the following:
an axially aligned second injector (364) opening axially into a main pipe (370),
an exhaust pipe (372) opening into the main pipe (370) downstream of the second injector (364) and communicating with the cooking chamber (10),
an outlet (374) near the end of the main pipe (370) and
a controllable valve (366) disposed in front of the second injector (364).

10. A cooking apparatus according to any of the preceding claims, characterised in that the device (310, 312; 320 to 332; 340 to 348; 350 to 354; 360 to 374; 380 to 390) for removing moisture from the cooking chamber (10) comprises at least one controllable condenser (380, 384, 386).

11. A cooking apparatus according to claim 10, characterised in that the condenser (380, 384, 386) comprises a line (380) in the cooking chamber (10) and flowed through in controllable manner by a cooling medium (384), and a line (386) for discharging water of condensation.

12. A cooking apparatus according to any of the preceding claims, characterised in that at least one temperature sensor (60) is disposed in the cooking chamber (10), and the regulating device (50) receives signals from the temperature sensor (60) and processes them as a second control parameter.

13. A cooking apparatus according to any of the preceding claims, characterised in that the set value for the output signals of the moisture sensor (40) is adjustable.

14. A cooking apparatus according to claim 13, characterised in that the set value for the output signals of the moisture sensor (40) is adjustable by means of a regulator, a digital keyboard or the like, corresponding to a water partial pressure of 0 to 1 bar.

15. A cooking apparatus according to claim 13, characterised by a selector switch, a keyboard or the like for inputting the nature of the substance to be cooked, the regulating device comprising a memory for storing set values appropriate to the various kinds of substance for cooking.

## Revendications

1. Appareil de cuisson comprenant une chambre de cuisson (10) et un dispositif (20) d'alimentation de la chambre de cuisson (10) en eau sous forme liquide ou sous forme de vapeur, un dispositif (310, 312 ; 320 à 332 ; 340 à 348 ; 350 à 354 ; 360 à 374 ; 380 à 390) d'évacuation de l'humidité hors de la chambre de cuisson (10), ainsi qu'au moins un capteur d'humidité (40) dans la chambre de cuisson et un dispositif de régulation (50) qui enregistre, comme premiers paramètres de régulation, les signaux de sortie du capteur d'humidité, les compare avec une valeur de consigne et, en fonction du résultat de la comparaison, actionne le dispositif (20) d'alimentation de la chambre de cuisson (10) en eau ou le dispositif (310, 312 ; 320 à 332 ; 340 à 348 ; 350 à 354 ; 360 à 374 ; 380 à 390) d'évacuation de l'humidité hors de la chambre de cuisson (10).

2. Appareil de cuisson selon la revendication 1, caractérisé en ce que le dispositif (20) d'alimentation de la chambre de cuisson (10) en eau comprend un générateur de vapeur à action commandée.

3. Appareil de cuisson selon la revendication 1 ou 2, caractérisé en ce que le dispositif (20) d'alimentation de la chambre de cuisson (10) en eau-comprend au moins un premier injecteur (24) à action commandée pour introduire de l'eau dans la chambre de cuisson (10).

4. Appareil de cuisson selon l'une des revendications précédentes, caractérisé en ce que le dispositif (310, 312 ; 320 à 332 ; 340 à 348 ; 350 à 354 ; 360 à 374 ; 380 à 390) d'évacuation de l'humidité hors de la chambre de cuisson (10) comprend un ventilateur auxiliaire (310) à action commandée pour envoyer de l'air dans la chambre de cuisson (10).

5. Appareil de cuisson selon l'une des revendications -précédentes, caractérisé en ce que le dispositif (310, 312 ; 320 à 332 ; 340 à 348 ; 350 à 354 ; 360 à 374 ; 380 à 390) d'évacuation de l'humidité hors de la chambre de cuisson (10) comprend :
- au moins une pale auxiliaire (324) montée sur le ventilateur principal (326) de l'appareil de cuisson,
- au moins un perçage (328) dans la joue porteuse du ventilateur principal (326), et
- au moins un orifice (320) à obturation commandée dans la paroi du caisson intérieur de l'appareil de cuisson.

6. Appareil de cuisson selon l'une des revendications précédentes, caractérisé en ce que le dispositif (310, 312 ; 320 à 332 ; 340 à 348 ; 350 à 354 ; 360 à 374 ; 380 à 390) d'évacuation de l'humidité hors de la chambre de cuisson (10) comprend un déflecteur double (340) en tôle à obturation commandée, comprenant au moins une entrée d'air (344) en direction du ventilateur principal (326) de l'appareil de cuisson.

7. Appareil de cuisson selon l'une des revendications précédentes, caractérisé en ce que le dispositif (310, 312 ; 320 à 332 ; 340 à 348 ; 350 à 354 ; 360 à 374 ; 380 à 390) d'évacuation de l'humidité hors de la chambre de cuisson (10) comprend au moins un premier ventilateur à action commandée pour aspirer le milieu humide.

8. Appareil de cuisson selon l'une des revendications précédentes, caractérisé en ce que le dispositif (310, 312 ; 320 à 332 ; 340 à 348 ; 350 à 354 ; 360 à 374 ; 380 à 390) d'évacuation de l'humidité hors de la chambre de cuisson (10) comprend au moins une cheminée (350) à obturation commandée.

9. Appareil de cuisson selon l'une des revendications précédentes, caractérisé en ce que le dispositif (310, 312 ; 320 à 332 ; 340 à 348 ; 350 à 354 ; 360 à 374 ; 380 à 390) d'évacuation de l'humidité hors de la chambre de cuisson (10) comprend :
- un second injecteur (364) qui débouche axialement dans un conduit principal (370) et qui est dirigé axialement,
- un conduit d'aspiration (372) qui débouche dans le conduit principal (370) en aval du second injecteur (364) et qui communique avec la chambre de cuisson (10),
- un conduit de sortie (374) disposé dans la zone de l'extrémité du conduit principal (370), et
- une soupape (366) à action commandée implantée en amont du second injecteur (364).

10. Appareil de cuisson selon l'une des revendications précédentes, caractérisé en ce que le dispositif (310, 312 ; 320 à 332 ; 340 à 348 ; 350 à 354 ; 360 à 374 ; 380 à 390) d'évacuation de l'humidité hors de la chambre de cuisson (10) comprend au moins un condenseur (380, 384, 386) à action commandée.

11. Appareil de cuisson selon la revendication 10, caractérisé en ce que le condenseur (380, 384, 386) comprend une conduite (380) disposée dans la chambre de cuisson (10) et parcourue, de manière commandée, par un agent de refroidissement (384), ainsi qu'un conduit (386) d'évacuation de l'eau de condensation.

12. Appareil de cuisson selon l'une des revendications précédentes, caractérisé en ce qu'au moins un capteur de température (60) est implanté dans la chambre de cuisson (10), et en ce que le dispositif de régulation (50) reçoit des signaux du capteur de température (60) et les traite comme seconds paramètres de régulation.

13. Appareil de cuisson selon l'une des revendications précédentes, caractérisé en ce que la valeur de consigne pour les signaux de sortie du capteur d'humidité (40) est réglable.

14. Appareil de cuisson selon la revendication 13, caractérisé en ce que la valeur de consigne pour les signaux de sortie du capteur d'humidité (40) peut être réglée au moyen d'un régulateur, d'un clavier numérique ou analogue, en fonction d'une pression partielle d'eau de 0, 1 bar.

15. Appareil de cuisson selon la revendication 13, caractérisé par un sélecteur, un clavier ou analogue pour entrer le type d'aliment à cuire, le dispositif de régulation comprenant une mémoire pour mémoriser des valeurs de consigne adaptées aux différents types d'aliments à cuire.
